# EUROPEAN PATENT SPECIFICATION

(11) **EP 3 675 495 B1**
(45) Date of publication and mention of the grant of the patent: **28.10.2026**
(21) Application number: 19216442.4
(22) Date of filing: 16.12.2019
(51) Int. Cl.: H04N 19/433, H04N 19/577

(54) **APPARATUSES AND METHODS FOR IMAGE DECODING**
VORRICHTUNGEN UND VERFAHREN ZUM DEKODIEREN VON BILDERN
APPAREILS ET PROCÉDÉS DE DÉCODAGE D'IMAGES

(30) Priority: 25.12.2018 CN 201811593362
(43) Date of publication of application: 01.07.2020
(73) Proprietor: SigmaStar Technology Ltd., Xiamen (CN)
(72) Inventor: SUN, Ming-Yong, Shanghai (CN)
(74) Representative: Haseltine Lake Kempner LLP

(56) References cited:
- US-A1- 2010 208 828
- US-A1- 2017 078 682
- R. SJOBERG ET AL: "Overview of HEVC high-level syntax and reference picture management", IEEE TRANSACTIONS ON CIRCUITS AND SYSTEMS FOR VIDEO TECHNOLOGY, vol. 22, no. 12, 5 October 2012 (2012-10-05), US, pages 1 - 14, XP055045360, ISSN: 1051-8215, DOI: 10.1109/TCSVT.2012.2223052

## Description

### BACKGROUND OF THE INVENTION

### 1. Field of the Invention

The present disclosure relates to image decoding, especially to an image decoding apparatus and an image decoding method.

### 2. Description of Related Art

Image codec can perform compression or decompression on digital videos such that the transmission of the videos can be more efficient. In most of the current encoding technologies, e.g. the encoding and decoding standard of H.264, H.265 or HEVC, the techniques of motion estimation and motion compensation are used to perform encoding process by using the frames within a specific time period as reference. The motion images can be efficiently recorded and compressed to save the data amount that is transmitted and stored. As a result, in the image decoding apparatus, a plurality of reference frames related to the timing sequence of the encoding process are required to be stored such that the frame under decoding can be processed according to the reference frames. Further, the part of the frame under decoding that is already decoded has to be temporarily stored during the decoding process.

However, the reference frames and the decoded frame are required to be stored in the memory. If there is no efficient storage mechanism, unnecessary memory usage may occur.

US 2010/208828 A1 concerns a video decoding technique.

### SUMMARY OF THE INVENTION

Aspects of the present invention are defined in the accompanying claims. According to a first aspect there is provided an image decoding method in accordance with claim 1. According to a second aspect there is provided an image decoding apparatus in accordance with claim 4. Advantageous optional features are defined in the dependent claims. In consideration of the problem of the prior art, an object of the present disclosure is to provide an image decoding method and an image decoding apparatus to allow the reference frame required to perform decoding process and the generated decoded frame share the temporary storage block in the memory module to effectively lower the usage of the memory.

The present disclosure discloses an image decoding method that includes steps outlined below. Control information in an image stream is read and decoded. A plurality of image stream packets in the image stream are read according to the control information. According to at least the control information, pixel data of a first reference frame from a first temporary storage block of a memory module and/or reading pixel data of a second reference frame from a second temporary storage block of the memory module are selectively read by a decoding circuit. A decoding process is performed according to the image stream packets and selectively according to the pixel data of the first reference frame and/or the pixel data of the second reference frame to generate pixel data of a decoded frame. During the decoding process, the pixel data of the decoded frame is transmitted to a post-processing circuit and the pixel data of the decoded frame is stored to one of the first temporary storage block and the second temporary storage block according to the control information.

The present disclosure also discloses an image decoding apparatus that includes a memory module, a decoding circuit, a post-processing circuit and a processing circuit electrically coupled to the memory module, the decoding circuit and the post-processing circuit. The processing circuit is configured to execute a plurality of software or firmware executable commands to operate an image decoding method. The image decoding method includes steps outlined below. Control information in an image stream is read and decoded. A plurality of image stream packets in the image stream are read according to the control information. According to at least the control information, pixel data of a first reference frame from a first temporary storage block of a memory module and/or reading pixel data of a second reference frame from a second temporary storage block of the memory module are selectively read by a decoding circuit. A decoding process is performed according to the image stream packets and selectively according to the pixel data of the first reference frame and/or the pixel data of the second reference frame to generate pixel data of a decoded frame. During the decoding process, the pixel data of the decoded frame is transmitted to a post-processing circuit and the pixel data of the decoded frame is stored to one of the first temporary storage block and the second temporary storage block according to the control information.

The present disclosure further discloses an image decoding method that includes steps outlined below. Control information is read and decoded in an image stream. A plurality of image stream packets in the image stream is read according to the control information. According to at least the control information, pixel data of a first reference frame is read from a first temporary storage block of a memory module, wherein a stored content in the first temporary storage block is stored in an order, and the stored content comprises a former part and a latter part, wherein the former part is a maximum motion vector search range frame and the latter part is the first reference frame. A decoding process is performed according to the image stream packets and according to at least the pixel data of the first reference frame to generate pixel data of a decoded frame. During the decoding process, the pixel data of the decoded frame is transmitted to the post-processing circuit and the pixel data of the decoded frame is stored to the first temporary storage block according to the control information to begin to replace the stored content from a part of the stored content having the most prior order.

The present disclosure further discloses an image decoding apparatus that includes a memory module, a decoding circuit, a post-processing circuit and a processing circuit electrically coupled to the memory module, the decoding circuit and the post-processing circuit. The processing circuit is configured to execute a plurality of software or firmware executable commands to operate an image decoding method. The image decoding method includes steps outlined below. Control information is read and decoded in an image stream. A plurality of image stream packets in the image stream is read according to the control information. According to at least the control information, pixel data of a first reference frame is read from a first temporary storage block of a memory module, wherein a stored content in the first temporary storage block is stored in an order, and the stored content comprises a former part and a latter part, wherein the former part is a maximum motion vector search range frame and the latter part is the first reference frame. A decoding process is performed according to the image stream packets and according to at least the pixel data of the first reference frame to generate pixel data of a decoded frame. During the decoding process, the pixel data of the decoded frame is transmitted to the post-processing circuit and the pixel data of the decoded frame is stored to the first temporary storage block according to the control information to begin to replace the stored content from a part of the stored content having the most prior order.

These and other objectives of the present disclosure will no doubt become obvious to those of ordinary skill in the art after reading the following detailed description of the preferred embodiments that are illustrated in the various figures and drawings.

### BRIEF DESCRIPTION OF THE DRAWINGS

FIG. 1 is a block diagram of an image decoding apparatus in an embodiment of the present invention.
FIG. 2 is a flow chart of an image decoding method in an embodiment of the present invention.
FIG. 3A to FIG. 3C are respectively a diagram of the first temporary storage block in an embodiment of the present invention.

### DETAILED DESCRIPTION OF THE PREFERRED EMBODIMENTS

An aspect of the present invention is to provide an image decoding apparatus and an image decoding method to efficiently economize the storage of the reference frame and the decoded frame in the memory during the decoding process.

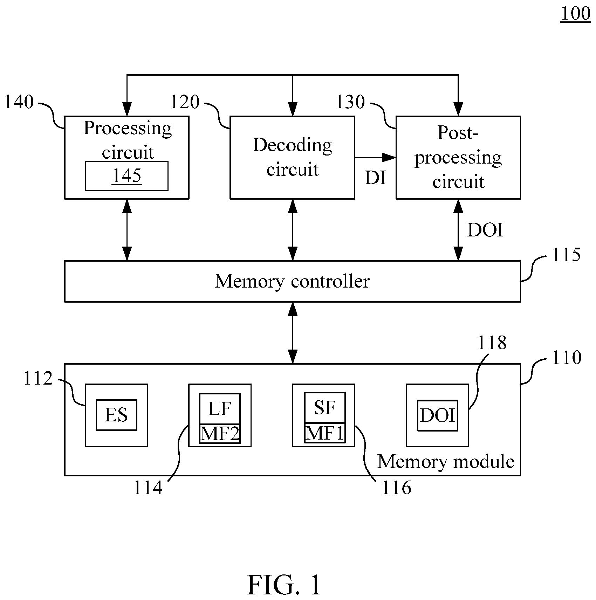

Reference is now made to FIG. 1. FIG. 1 is a block diagram of an image decoding apparatus 100 in an embodiment of the present invention. The image decoding apparatus 100 receives an image stream (element stream) ES and performs decoding process and post-processing according to image stream packets and control information of the image stream ES to generate output decoded image DOI such that a display module (not illustrated) displays the output decoded image DOI.

The image decoding apparatus 100 at least includes a memory controller 115, a memory module 110, a decoding circuit 120, a post-processing circuit 130 and a processing circuit 140. The memory module 110 can also be an independent element and can be coupled to the image decoding apparatus 100 through an interface.

In an embodiment, the memory module 110 is electrically coupled to the decoding circuit 120, the post-processing circuit 130 and the processing circuit 140 through the memory controller 115. The memory module 110 has different blocks to store different data that the image decoding process requires and at least includes blocks for storing image stream ES, one or more block for storing short-term reference frame, one or more block for storing long-term reference frame and a DOI block. The memory module 110 can be implemented by a memory having a faster speed, such as, but not limited to a double data rate synchronous dynamic random access memory (DDR SDRAM).

In an embodiment, the image decoding device 100 further includes the memory controller 115 that is implemented by such as, but not limited to a memory interface unit (MUI). The other circuit modules in the image decoding device 100, e.g. the decoding circuit 120, the post-processing circuit 130 and the processing circuit 140 can access the memory module 110 through the memory controller 115 to store the data in the memory module 110 or read data from the memory module 110.

The decoding circuit 120 performs decoding process according to required data, such as, but not limited to reference frames and the image stream packets, gradually stores the pixels finished being decoded to the memory module 110 and transmits the pixels finished being decoded to the post-processing circuit 130 to generate a decoded frame DI. The decoding circuit 120 can perform the decoding process according to such as, but not limited to H.264 or H.265 standard.

The post-processing circuit 130 performs post-processing, such as, but not limited to scaling, image quality processing or format conversion, on the decoded frame DI to generate the output decoded image DOI.

The processing circuit 140 is electrically coupled to the memory module 110, the decoding circuit 120 and the post-processing circuit 130. The processing circuit 140 can be configured to include one or more microprocessor or include image stream analysis circuit to execute software or firmware executable commands 145 to further perform the function of the image decoding apparatus 100. More specifically, the processing circuit 140 can retrieve the software or firmware executable commands 145 from a storage module (not illustrated) included in the image decoding apparatus 100, in which the software or firmware executable commands 145 includes such as, but not limited to commands for decoding image stream control message, firmware or driver of the hardware modules including the post-processing circuit 130 and the decoding circuit 120 and related commands for operating and controlling the hardware modules including the post-processing circuit 130 and the decoding circuit 120. Accordingly, the processing circuit 140 further operates and controls the hardware modules including the post-processing circuit 130 and the decoding circuit 120 to accomplish the mechanism of performing decoding process and post-processing on the image stream ES to generate the output decoded image DOI.

In an embodiment, the post-processing circuit 130, the decoding circuit 120 and the processing circuit 140 exchange required control message with each other during the image stream decoding process and the post-processing procedure.

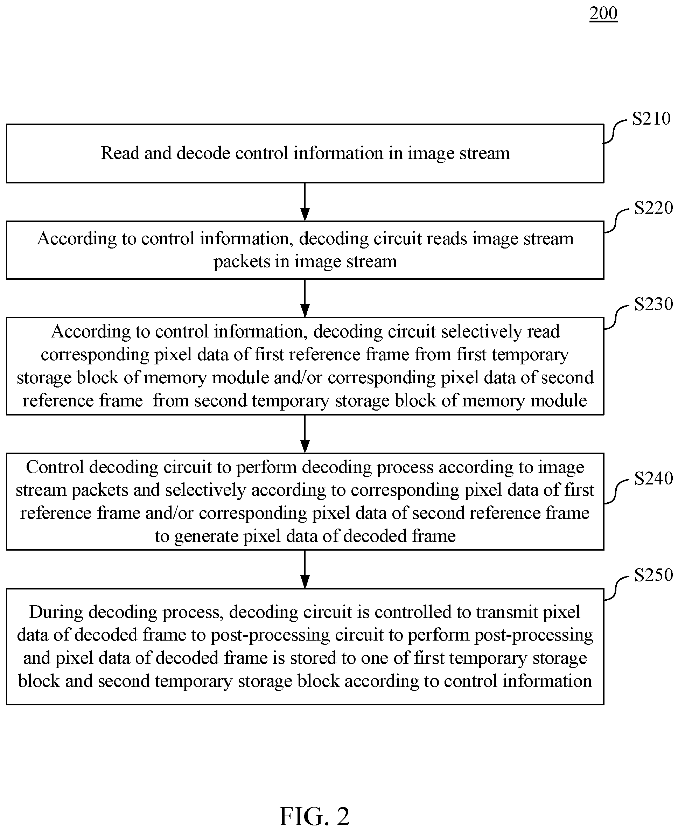

Reference is now made to FIG. 2 at the same time. The detail of the function of the image decoding apparatus 100 is further described in the following paragraphs in accompany with FIG. 1 and FIG. 2.

FIG. 2 is a flow chart of an image decoding method 200 in an embodiment of the present invention. The image decoding method 200 can be used in the image decoding apparatus 100 illustrated in FIG. 1. As illustrated in FIG. 2, an embodiment of the image decoding method 200 includes the following steps.

Step S210: The processing circuit 140 reads and decodes the control information in the image stream ES. The control information is used to identify whether the packets belong to a short-term reference frame (STRF) or a long-term reference frame (LTRF) and identify the parameters used for decoding.

In an embodiment, the image stream ES is stored temporarily in an image stream packet temporary storage block 112 of the memory module 110. The processing circuit 140 and the decoding circuit 120 can read the content in the image stream packet temporary storage block 112 through the memory controller 115 and obtain the control information and the image stream packets (ES packets) in the image stream ES.

Step S220: According to the control information, the decoding circuit 120 reads the image stream packets in the image stream ES.

In an embodiment, besides the control information, the image stream ES further includes the image stream packets. The control information in the image stream ES includes the information related to encoding, and the image stream packets include actual image data. According to the control information, the processing circuit 140 can learn the information of the packets that are going to be decoded and the frames that are going to be used as reference and further control the decoding circuit 120 to read the image stream packets in the image stream ES through the memory controller 115.

Step S230: According to at least the control information, the decoding circuit 120 selectively read pixel data of a first reference frame SF from a first temporary storage block 116 of the memory module 110 and/or pixel data of a second reference frame LF from a second temporary storage block 114 of the memory module 110.

In an embodiment, the decoding circuit 120 can also selectively perform the read operation described above simultaneously according to the control information and the content of the image stream packets.

In an embodiment, the stored content in the first temporary storage block 116 at least includes the first reference frame SF, in which the first reference frame SF is a short-term reference frame in the present embodiment. In an example, the current frame under decoding is the N-th frame. The first reference frame SF can be the N-1-th frame, i.e. the frame that is finished being decoded and is one frame previous to the current frame. The stored content in the second temporary storage block 114 at least includes the second reference frame LF, in which the second reference frame LF is a long-term reference frame in the present embodiment. In an example, the current frame under decoding is the N-th frame. The second reference frame LF can be the N-5-th frame, which is not the frame that is one frame previous to the current frame. The decoding circuit 120 reads the reference data according to requirement of each of the current frame under decoding, in which in a condition both of the short-term reference frame and the long-term reference frame are read, in another condition only one of the short-term reference frame and the long-term reference frame is read and in yet another condition no reference frame is read.

More specifically, in order to save the usage of the memory, if the current frame under decoding is also used as the short-term reference frame (for the frame to be decoded later), the current frame under decoding shares the first temporary storage block 114 with the previous decoded frame. The current frame under decoding gradually replaces the previous decoded frame. However, at least a block of the previous decoded frame is required to be kept that is used to perform the decoding process on the current frame under decoding. In the present embodiment, the image frame included in the image stream ES has a height of H and a width of W such that the size of the image frame is H×W. When a number of rows of a maximum forward motion vector search range set in the encoding and decoding standard is V, the size of the frame of the maximum forward motion vector search range is V×W. As a result, the size of the first temporary storage block 116 is H×W+V×W. In an embodiment, the first temporary storage block 116 is a ring buffer. However, the present invention is not limited thereto. If the current frame under decoding is also used as the long-term reference frame, the current frame under decoding shares the second temporary storage block 114 with the previous decoded frame. The operations under such a condition is the same as the operation under the condition that the short-term reference frame shares the first temporary storage block 116 with the previous decoded frame. Accordingly, the detail is not described herein.

Step S240: The decoding circuit 120 is controlled to perform a decoding process according to the image stream packets and selectively according to the pixel data of the first reference frame SF and/or the pixel data of the second reference frame LF to generate pixel data of the decoded frame DI.

In an embodiment, the decoding circuit 120 performs decoding on the image stream packets in the image stream ES in an order according to a video encoding and decoding standard, e.g. H.264 or H.265, stores the pixels finished being decoded in the memory module 110 and transmits the pixels finished being decoded to the post-processing circuit 130 until the whole current frame under decoding is finished being decoded to generate the decoded frame DI. When the decoding circuit 120 performs decoding process on the image stream packets, the pixel data of the first reference frame SF and/or the pixel data of the second reference frame LF is selectively used as reference according to the control information and the image stream packets.

Step S250: During the decoding process, the decoding circuit 120 is controlled to transmit the pixel data of the decoded frame DI to the post-processing circuit 130 to perform post-processing and the pixel data of the decoded frame DI is stored to one of the first temporary storage block 116 and the second temporary storage block 114 according to the control information. In an embodiment, when the decoded frame DI is used as the short-term reference frame, the decoded pixels in the decoded frame DI are stored in the first temporary storage block 116 in a sequential order. When the decoded frame DI is used as the long-term reference frame, the decoded pixels in the decoded frame DI are stored in the second temporary storage block 114 in a sequential order.

In another embodiment, the storage of the reference frame is not limited to a short-term reference frame and a long-term reference frame. Further, the storage of the reference frame is not limited to the storage of the short-term reference frame in the first temporary storage block 116 and the storage of the long-term reference frame in the second temporary storage block 114. The system can modify the frame to be stored and the location that the frame is stored according to practical requirements.

Moreover, in an embodiment, the output decoded image DOI generated after the post-processing performed by the post-processing circuit 130 can be displayed by the external display module.

In an embodiment, when the decoded frame is the short-term reference frame, the decoding circuit 120 simultaneously reads the pixel data of the first reference frame SF in the first temporary storage block 116 through the memory controller 115 and stores the pixel data of the generated decoded frame DI in the first temporary storage block 116 through the memory controller 115.

In an example, the first temporary storage block 116 is a ring buffer. When the first reference frame SF is required during the decoding process performed on the current frame under decoding, the size of the required maximum forward motion vector search range is V×W. The decoding circuit 120 begins to store the pixel data of the decoded frame DI from a section having the size of V×W in the first temporary storage block 116 prior to a position of the first reference frame SF. The decoded frame DI first replaces the content of the original maximum forward motion vector search range frame MF1. Subsequently, after the content of the maximum forward motion vector search range frame MF1 having the size of V×W is fully replaced, the decoded frame DI starts to replace a first section of the first reference frame SF until all the data in the decoded frame DI is generated and stored.

By using the method described above that gradually replaces the content in the first temporary storage block 116 with the decoded frame DI, the first reference frame SF and the decoded frame DI can share the first temporary storage block 116. However, since the decoding circuit 120 requires the information of the section corresponding to the motion vector during the performance of decoding process, at least the section in the first reference frame SF that matches the maximum forward motion vector search range is required to be kept such that the final block of the decoded frame DI can be decoded by the decoding circuit 120 by referring to the first reference frame SF. The size of the maximum forward motion vector search range (i.e. the size of V) can be determined according to practical requirements.

When the decoded frame is used as the long-term reference frame, the decoding circuit 120 simultaneously reads the pixel data of the second reference frame LF in the second temporary storage block 114 through the memory controller 115 and stores the pixel data of the generated decoded frame DI in the second temporary storage block 114 through the memory controller 115. The operation performed on the second temporary storage block 114 is identical to the operation performed on the first temporary storage block 116. The detail of the operation is therefore not described herein.

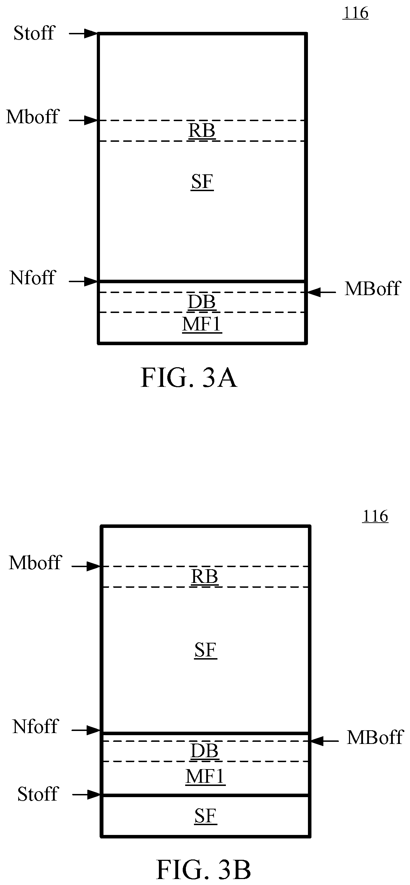

Reference is now made to FIG. 3A to FIG. 3C. FIG. 3A to FIG. 3C are respectively a diagram of the first temporary storage block 116 in an embodiment of the present invention.

As illustrated in FIG. 3A, the first temporary storage block 116 stores the first reference frame SF and the maximum forward motion vector search range frame MF1. When the decoding process is initialized, the decoding circuit 120 starts to read the first reference frame SF from an initial position thereof and starts to store the decoded frame DI from an initial position of the maximum forward motion vector search range frame MF1.

In an embodiment, the read operation performed on the first reference frame SF is performed according to the following method. At first, an address offset of the initial position of the first reference frame SF relative to the initial position of the first temporary storage block 116 can be recorded as a reference frame initial address offset Stoff. Further, a frame block initial address offset Mboff of a reference frame block BR corresponding to the first reference frame SF can be retrieved by the processing circuit 140 according to the control information.

The processing circuit 140 further adds the frame block initial address offset Mboff and the reference frame initial address offset Stoff and divides an added result by the size (H×W+V×W) of the first temporary storage block 116 to obtain a remainder R1. More specifically, the remainder R1=(Mboff+Stoff) mod (H×W+V×W). In an embodiment, since the storage of the first reference frame SF is continuous, the added result of the frame block initial address offset Mboff and the reference frame initial address offset Stoff does not exceed the size of the first temporary storage block 114. The remainder R1 is equivalent to the added result.

Subsequently, the processing circuit 140 calculates a read initial address (IA+R1) by adding a temporary block initial address IA of the first temporary storage block 116 in the memory module 110 and the remainder R1. The decoding circuit 120 starts to read the required reference frame block RB from the read initial address.

On the other hand, the storage of the decoded frame DI can be performed by using the following method. At first, an address offset of the initial position of the N-th decoded frame DI relative to the initial position of the first temporary storage block 116 can be recorded as a decoded frame initial address offset Nfoff. Further, a decoded frame block initial address offset MBoff of a decoded frame block included in the decoded frame DI relative to the initial position of the decoded frame DI can be determined by the processing circuit 140.

The processing circuit 140 further adds the decoded frame block initial address offset MBoff and the decoded frame initial address offset Nfoff and divides an added result by the size of the first temporary storage block 116 to obtain a remainder R2. More specifically, the remainder R2=(MBoff+Nfoff) mod (H×W+V×W).

In the present embodiment, when the part of the decoded frame DI already stored does not exceed the size of the maximum forward motion vector search range frame MF1, the added result of the decoded frame block initial address offset MBoff and the decoded frame initial address offset Nfoff does not exceed the size of the first temporary storage block 116. The remainder R2 is equivalent to the added result.

Subsequently, the processing circuit 140 calculates a storage initial address (IA+R2) by adding the temporary block initial address IA of the first temporary storage block 116 in the memory module 110 and the remainder R2. The decoding circuit 120 starts to store the decoded frame block DB from the storage initial address.

When the part of the decoded frame DI already stored exceeds the size of the maximum forward motion vector search range frame MF1, the added result of the decoded frame block initial address offset MBoff and the decoded frame initial address offset Nfoff exceeds the size of the first temporary storage block 116. When the added result is divided by the size (H×W+V×W) of the first temporary storage block 116, the quotient is larger than 1. As a result, by obtaining the remainder R2, the processing circuit 140 calculates the actual storage initial address (IA+R2) by adding the temporary block initial address IA of the first temporary storage block 116 in the memory module 110 and the remainder R2. The decoding circuit 120 starts to store the decoded frame block from such storage initial address.

More specifically, when the part of the decoded frame DI already stored exceeds the size of the maximum forward motion vector search range frame MF1, the processing circuit 140 further performs storage operation from the top of the first temporary storage block 116 to replace the original first reference frame SF.

As a result, after performing decoding process by using the method described above, as illustrated in FIG. 3B, the stored N-th decoded frame DI acts as the new first reference frame SF, in which the storage of the new first reference frame SF in the first temporary storage block 116 is divided into two parts. The first part corresponds to a former decoding time and is equivalent to the maximum forward motion vector search range frame MF1. The second part corresponds to latter decoding time. However, the address of the second part in the first temporary storage block 116 starts from the initial address of the first temporary storage block 114 and is thus prior to the address of the first part in the first temporary storage block 114. Further, the second part is equivalent to a part of the first reference frame SF in FIG. 3A. The other part of the first reference frame SF in FIG. 3A becomes the new maximum forward motion vector search range frame MF1.

When the decoding process corresponding to the N+1-th decoded frame DI is performed, the procedure described above is repeated. More specifically, the decoding circuit 120 performs the calculation of the address by using the method described above and starts to perform read operation according to the initial address of the first reference frame SF in FIG. 3B. After the decoding process, another calculation of the address is further performed to start to store the decoded frame DI from the initial address of the maximum forward motion vector search range frame MF1 in FIG. 3B.

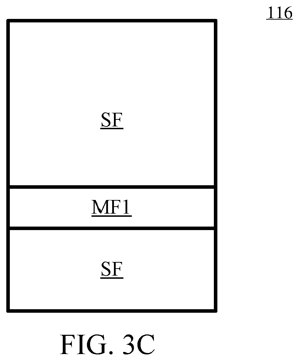

As a result, by using the method described above to perform decoding process, as illustrated in FIG. 3C, the stored N+1-th decoded frame DI acts as the new first reference frame SF. The remained part of the original first reference frame SF becomes the new maximum forward motion vector search range frame MF1.

As a result, the image decoding apparatus 100 allows the first reference frame SF and the decoded frame DI to share the same temporary storage block by using the circular storage mechanism in a sequential order. In an actual implementation, the circular storage mechanism of the first temporary storage block 116 can be realized by a circular buffer or by disposing a memory management unit.

Furthermore, during the generation of the decoded frame DI, the decoding circuit 120 simultaneously transmits the decoded frame DI to the post-processing circuit 130 to perform post-processing thereon. The decoded frame DI is not required to be stored in an additional storage and can be accessed by the post-processing circuit 130 directly. As a result, the mechanism of the present invention described above can save the bandwidth of the accessing activity of the memory.

In an embodiment, the decoding circuit 120 can also compress the generated decoded frame DI first and store the compressed decoded frame DI to the first temporary storage block 116. As a result, the size of the first temporary storage block 116 can be further decreased to save more usage of the memory.

It is appreciated that in the embodiments described above, the condition that the first temporary storage block 116 is configured to store the short-term reference frame (the first reference frame SF) is used as an example. However, in another embodiment, the second temporary storage block 114 configured to store the long-term reference frame (the second reference frame LF) can also be implemented to have the circular buffer mechanism described above such that the second reference frame LF used as the long-term reference frame and the decoded frame DI can share the same temporary storage block.

More specifically, after reading the control information, the processing circuit 140 determines whether the decoded frame DI that is decoded in the moment should be stored in the first temporary storage block 116 corresponding to the short-term reference frame or in the second temporary storage block 114 corresponding to the long-term reference frame. After the target of the storage is determined, the processing circuit 140 replaces the content in the target of the storage by using the mechanism described above. As a result, the operation mechanism of the second temporary storage block 114 is not further described herein.

Moreover, in the embodiments described above, the condition that the first temporary storage block 116 is configured to store one short-term reference frame is used as an example. In other embodiments, the first temporary storage block 116 may be configured to store a plurality of short-term reference frames such that the decoding circuit 120 performs decoding process according to the plurality of short-term reference frames.

In addition, in the embodiments described above, the condition that both of the short-term reference frame and the long-term reference frame are used as reference to perform decoding process is used as an example. In other embodiments, the decoding circuit 120 can perform decoding process according to only the short-term reference frame.

It is appreciated that the embodiments described above are merely an example. In other embodiments, it should be appreciated that many modifications and changes may be made by those of ordinary skill in the art without departing, from the invention.

In summary, the image decoding apparatus and the image decoding method of the present invention allow the reference frame required to perform decoding process and the generated decoded frame share the temporary storage block in the memory module to effectively lower the usage of the memory.

## Claims

1. An image decoding method (200), comprising:
reading and decoding control information in an image stream (S210);
reading a plurality of image stream packets in the image stream according to the control information (S220);
according to at least the control information, selectively reading pixel data of a first reference frame from a first temporary storage block of a memory module and/or reading pixel data of a second reference frame from a second temporary storage block of the memory module by a decoding circuit (S230);
performing a decoding process according to the image stream packets and selectively according to the pixel data of the first reference frame and/or the pixel data of the second reference frame to generate pixel data of a decoded frame (S240); and
during the decoding process, transmitting the pixel data of the decoded frame to a post-processing circuit and storing the pixel data of the decoded frame to one of the first temporary storage block and the second temporary storage block according to the control information (S250);
wherein the step of storing the pixel data of the decoded frame to one of the first temporary storage block and the second temporary storage block according to the control information further comprising:
storing the pixel data of the decoded frame to the first temporary storage block when the decoded frame is a short-term reference frame; and
wherein the step of storing the pixel data of the decoded frame to the first temporary storage block further comprising:
beginning to store the pixel data of the decoded frame from a position in the first temporary storage block with a maximum motion vector search range prior to a position of the first reference frame.

2. The image decoding method (200) of claim 1, wherein the step of storing the pixel data of the decoded frame to one of the first temporary storage block and the second temporary storage block according to the control information further comprising:
compressing the pixel data of the decoded frame.

3. The image decoding method (200) of claim 1 or claim 2, wherein the first temporary storage block and the second temporary storage block are located in a same dynamic random access memory.

4. An image decoding apparatus (100) comprising:
a memory module (110);
a decoding circuit (120);
a post-processing circuit (130); and
a processing circuit (140) electrically coupled to the memory module (110), the decoding circuit (120) and the post-processing circuit (130) and configured to execute a plurality of software or firmware executable commands to operate an image decoding method, wherein the image decoding method comprises:
reading and decoding control information in an image stream;
reading a plurality of image stream packets in the image stream according to the control information;
according to at least the control information, selectively reading pixel data of a first reference frame from a first temporary storage block of the memory module (110) and/or reading pixel data of a second reference frame from a second temporary storage block of the memory module (110) by the decoding circuit (120);
performing a decoding process according to the image stream packets and selectively according to the pixel data of the first reference frame and/or the pixel data of the second reference frame to generate pixel data of a decoded frame; and
during the decoding process, transmitting the pixel data of the decoded frame to the post-processing circuit (130) and storing the pixel data of the decoded frame to one of the first temporary storage block and the second temporary storage block according to the control information;
wherein the step of storing the pixel data of the decoded frame to one of the first temporary storage block and the second temporary storage block according to the control information further comprising:
storing the pixel data of the decoded frame to the first temporary storage block when the decoded frame is a short-term reference frame; and
wherein the step of storing the pixel data of the decoded frame to the first temporary storage block further comprising:
beginning to store the pixel data of the decoded frame from a position in the first temporary storage block with a maximum motion vector search range prior to a position of the first reference frame.

5. The image decoding apparatus (100) of claim 4, wherein the step of storing the pixel data of the decoded frame to one of the first temporary storage block and the second temporary storage block according to the control information further comprising:
compressing the pixel data of the decoded frame.

6. The image decoding apparatus (100) of claim 4 or claim 5, wherein the first temporary storage block and the second temporary storage block are located in a same dynamic random access memory.

## Patentansprüche

1. Bilddekodierungsverfahren (200), umfassend:
Lesen und Dekodieren von Steuerinformationen in einem Bildstrom (S210);
Lesen einer Vielzahl von Bildstrompaketen in dem Bildstrom gemäß den Steuerinformationen (S220);
gemäß mindestens der Steuerinformationen selektives Lesen von Pixeldaten eines ersten Referenzrahmens aus einem ersten temporären Speicherblock eines Speichermoduls und/oder Lesen von Pixeldaten eines zweiten Referenzrahmens aus einem zweiten temporären Speicherblock des Speichermoduls durch eine Dekodierschaltung (S230);
Durchführen eines Dekodiervorgangs gemäß den Bildstrompaketen und selektiv gemäß den Pixeldaten des ersten Referenzrahmens und/oder den Pixeldaten des zweiten Referenzrahmens, um Pixeldaten eines dekodierten Rahmens zu erzeugen (S240); und
während des Dekodiervorgangs Übertragen der Pixeldaten des dekodierten Rahmens an eine Nachverarbeitungsschaltung und Speichern der Pixeldaten des dekodierten Rahmens in einem von dem ersten temporären Speicherblock und dem zweiten temporären Speicherblock gemäß den Steuerinformationen (S250);
wobei der Schritt des Speicherns der Pixeldaten des dekodierten Rahmens in einem von dem ersten temporären Speicherblock und dem zweiten temporären Speicherblock gemäß den Steuerinformationen ferner Folgendes umfasst:
Speichern der Pixeldaten des dekodierten Rahmens in dem ersten temporären Speicherblock, wenn der dekodierte Rahmen ein Kurzzeit-Referenzrahmen ist; und
wobei der Schritt des Speicherns der Pixeldaten des dekodierten Rahmens in dem ersten temporären Speicherblock ferner Folgendes umfasst:
Beginnen, die Pixeldaten des dekodierten Rahmens von einer Position in dem ersten temporären Speicherblock mit einem maximalen Bewegungsvektorsuchbereich vor einer Position des ersten Referenzrahmens zu speichern.

2. Bilddekodierungsverfahren (200) nach Anspruch 1, wobei der Schritt des Speicherns der Pixeldaten des dekodierten Rahmens in einem von dem ersten temporären Speicherblock und dem zweiten temporären Speicherblock gemäß den Steuerinformationen ferner Folgendes umfasst:
Komprimieren der Pixeldaten des dekodierten Rahmens.

3. Bilddekodierungsverfahren (200) nach Anspruch 1 oder Anspruch 2, wobei sich der erste temporäre Speicherblock und der zweite temporäre Speicherblock in einem gleichen dynamischen Direktzugriffsspeicher befinden.

4. Bilddekodierungsvorrichtung (100), umfassend:
ein Speichermodul (110);
eine Dekodierschaltung (120);
eine Nachverarbeitungsschaltung (130); und
eine Verarbeitungsschaltung (140), die elektrisch mit dem Speichermodul (110), der Dekodierschaltung (120) und der Nachverarbeitungsschaltung (130) gekoppelt ist und konfiguriert ist, um eine Vielzahl von ausführbaren Software- oder Firmware-Befehlen auszuführen, um ein Bilddekodierungsverfahren zu betreiben, wobei das Bilddekodierungsverfahren Folgendes umfasst:
Lesen und Dekodieren von Steuerinformationen in einem Bildstrom;
Lesen einer Vielzahl von Bildstrompaketen in dem Bildstrom gemäß den Steuerinformationen;
gemäß mindestens den Steuerinformationen selektives Lesen von Pixeldaten eines ersten Referenzrahmens aus einem ersten temporären Speicherblock des Speichermoduls (110) und/oder Lesen von Pixeldaten eines zweiten Referenzrahmens aus einem zweiten temporären Speicherblock des Speichermoduls (110) durch die Dekodierschaltung (120);
Durchführen eines Dekodiervorgangs gemäß den Bildstrompaketen und selektiv gemäß den Pixeldaten des ersten Referenzrahmens und/oder den Pixeldaten des zweiten Referenzrahmens, um Pixeldaten eines dekodierten Rahmens zu erzeugen; und
während des Dekodiervorgangs Übertragen der Pixeldaten des dekodierten Rahmens an die Nachverarbeitungsschaltung (130) und Speichern der Pixeldaten des dekodierten Rahmens in einem von dem ersten temporären Speicherblock und dem zweiten temporären Speicherblock gemäß den Steuerinformationen;
wobei der Schritt des Speicherns der Pixeldaten des dekodierten Rahmens in einem von dem ersten temporären Speicherblock und dem zweiten temporären Speicherblock gemäß den Steuerinformationen ferner Folgendes umfasst:
Speichern der Pixeldaten des dekodierten Rahmens in dem ersten temporären Speicherblock, wenn der dekodierte Rahmen ein Kurzzeit-Referenzrahmen ist; und
wobei der Schritt des Speicherns der Pixeldaten des dekodierten Rahmens in dem ersten temporären Speicherblock ferner Folgendes umfasst:
Beginnen, die Pixeldaten des dekodierten Rahmens von einer Position in dem ersten temporären Speicherblock mit einem maximalen Bewegungsvektorsuchbereich vor einer Position des ersten Referenzrahmens zu speichern.

5. Bilddekodierungsvorrichtung (100) nach Anspruch 4, wobei der Schritt des Speicherns der Pixeldaten des dekodierten Rahmens in einem von dem ersten temporären Speicherblock und dem zweiten temporären Speicherblock gemäß den Steuerinformationen ferner Folgendes umfasst:
Komprimieren der Pixeldaten des dekodierten Rahmens.

6. Bilddekodierungsvorrichtung (100) nach Anspruch 4 oder Anspruch 5, wobei sich der erste temporäre Speicherblock und der zweite temporäre Speicherblock in einem gleichen dynamischen Direktzugriffsspeicher befinden.

## Revendications

1. Procédé de décodage d'images (200), comprenant :
la lecture et le décodage d'informations de commande dans un flux d'images (S210) ;
la lecture d'une pluralité de paquets de flux d'images dans le flux d'images selon les informations de commande (S220) ;
selon au moins les informations de commande, la lecture sélective de données de pixels d'une première trame de référence à partir d'un premier bloc de stockage temporaire d'un module de mémoire et/ou la lecture de données de pixels d'une seconde trame de référence à partir d'un second bloc de stockage temporaire du module de mémoire par un circuit de décodage (S230) ;
la réalisation d'un processus de décodage selon les paquets de flux d'images et de manière sélective selon les données de pixels de la première trame de référence et/ou les données de pixels de la seconde trame de référence pour générer des données de pixels d'une trame décodée (S240) ; et
pendant le processus de décodage, la transmission des données de pixels de la trame décodée à un circuit de post-traitement et le stockage des données de pixels de la trame décodée dans l'un du premier bloc de stockage temporaire et du second bloc de stockage temporaire selon les informations de commande (S250) ;
dans lequel l'étape de stockage des données de pixels de la trame décodée dans l'un du premier bloc de stockage temporaire et du second bloc de stockage temporaire selon les informations de commande comprend en outre :
le stockage des données de pixels de la trame décodée dans le premier bloc de stockage temporaire lorsque la trame décodée est une trame de référence à court terme ; et
dans lequel l'étape de stockage des données de pixels de la trame décodée dans le premier bloc de stockage temporaire comprend en outre :
le fait de commencer à stocker les données de pixels de la trame décodée à partir d'une position dans le premier bloc de stockage temporaire avec une plage de recherche de vecteur de mouvement maximale avant une position de la première trame de référence.

2. Procédé de décodage d'images (200) selon la revendication 1, dans lequel l'étape de stockage des données de pixels de la trame décodée dans l'un du premier bloc de stockage temporaire et du second bloc de stockage temporaire selon les informations de commande comprend en outre :
la compression des données de pixels de la trame décodée.

3. Procédé de décodage d'images (200) selon la revendication 1 ou la revendication 2, dans lequel le premier bloc de stockage temporaire et le second bloc de stockage temporaire sont situés dans une même mémoire vive dynamique.

4. Appareil de décodage d'images (100) comprenant :
un module de mémoire (110) ;
un circuit de décodage (120) ;
un circuit de post-traitement (130) ; et
un circuit de traitement (140) couplé électriquement au module de mémoire (110), au circuit de décodage (120) et au circuit de post-traitement (130), et configuré pour exécuter une pluralité de commandes exécutables par logiciel ou micrologiciel afin de mettre en œuvre un procédé de décodage d'images, dans lequel le procédé de décodage d'images comprend :
la lecture et le décodage d'informations de commande dans un flux d'images ;
la lecture d'une pluralité de paquets de flux d'images dans le flux d'images selon les informations de commande ;
selon au moins les informations de commande, la lecture sélective de données de pixels d'une première trame de référence à partir d'un premier bloc de stockage temporaire du module de mémoire (110) et/ou la lecture de données de pixels d'une seconde trame de référence à partir d'un second bloc de stockage temporaire du module de mémoire (110) par le circuit de décodage (120) ;
la réalisation d'un processus de décodage selon les paquets de flux d'images et de manière sélective selon les données de pixels de la première trame de référence et/ou les données de pixels de la seconde trame de référence pour générer des données de pixels d'une trame décodée ; et
pendant le processus de décodage, la transmission des données de pixels de la trame décodée au circuit de post-traitement (130) et le stockage des données de pixels de la trame décodée dans l'un du premier bloc de stockage temporaire et du second bloc de stockage temporaire selon les informations de commande ;
dans lequel l'étape de stockage des données de pixels de la trame décodée dans l'un du premier bloc de stockage temporaire et du second bloc de stockage temporaire selon les informations de commande comprend en outre :
le stockage des données de pixels de la trame décodée dans le premier bloc de stockage temporaire lorsque la trame décodée est une trame de référence à court terme ; et
dans lequel l'étape de stockage des données de pixels de la trame décodée dans le premier bloc de stockage temporaire comprend en outre :
le fait de commencer à stocker les données de pixels de la trame décodée à partir d'une position dans le premier bloc de stockage temporaire avec une plage de recherche de vecteur de mouvement maximale avant une position de la première trame de référence.

5. Appareil de décodage d'images (100) selon la revendication 4, dans lequel l'étape de stockage des données de pixels de la trame décodée dans l'un du premier bloc de stockage temporaire et du second bloc de stockage temporaire selon les informations de commande comprend en outre :
la compression des données de pixels de la trame décodée.

6. Appareil de décodage d'images (100) selon la revendication 4 ou la revendication 5, dans lequel le premier bloc de stockage temporaire et le second bloc de stockage temporaire sont situés dans une même mémoire vive dynamique.
